# EUROPÄISCHE PATENTSCHRIFT

(11) **EP 0 320 447 B1**
(45) Veröffentlichungstag und Bekanntmachung des Hinweises auf die Patenterteilung: **07.04.1993**
(21) Anmeldenummer: 88810817.2
(22) Anmeldetag: 29.11.1988
(51) Int. Cl.: C09B 41/00

(54) **Verfahren zur Herstellung von metallisierbaren Azofarbstoffen**
Process for the preparation of metallisable azo dyes
Procédé de préparation de colorants azo métallisables

(30) Priorität: 07.12.1987 CH 4757/87
(43) Veröffentlichungstag der Anmeldung: 14.06.1989
(73) Patentinhaber: CIBA-GEIGY AG, 4002 Basel (CH)
(72) Erfinder: Joswig, Hans Peter, Dr., D-7889 Grenzach-Wyhlen 1 (DE); Huber, Werner, D-7881 Schwörstadt (DE)

(56) Entgegenhaltungen:
- US-A- 2 812 321
- CHEMICAL ABSTRACTS, Band 106, Nr. 22, Juni 1987, Seite 88, Nr. 178104g, Columbus, Ohio, US; & JP-A-61 254 550 (MITSUI TOATSU CHEMICALS, INC.) 12-11-1986
- Rys, Zollinger "Farbstoffchemie" ISBN 3-527-259643 (1982) Seiten 59 und 71

## Beschreibung

Die Kupplung von 1-Diazo-2-hydroxynaphthalin-4-sulfonsäure bzw. von der entsprechenden eine Nitrogruppe enthaltende Komponente auf eine Kupplungskomponente der Benzol-, Naphthalin- oder heterocyclischen Reihe, die eine Hydroxygruppe in Nachbarstellung zu der Kupplungsstelle enthält, verläuft in einigen Fällen langsam und mit unbefriedigenden Ausbeuten.

In den letzten Jahren ist man zunehmend bestrebt, Herstellungsverfahren für Farbstoffe und deren Zwischenprodukte zu automatisieren und zu optimieren, und zwar sowohl was den Herstellungsprozess anbetrifft, als auch hinsichtlich der Aufarbeitung. Um hier zu befriedigenden Ergebnissen zu gelangen, ist man auf Verfahren angewiesen, die sich durch folgende Kriterien auszeichnen: möglichst quantitative Ausbeute, reproduzierbar gute Qualität, Umsetzungen mit möglichst wenig Aufarbeitungsschritten sowie schnelle Umsetzungen, die eine hohe Zahl von Umsetzungen pro Zeiteinheit ermöglichen.

Die 3P-61-254 550 betrifft ein Verfahren zur Herstellung von Azofarbstoffen, worin die Kupplung in Gegenwart von Ammoniumsulfat unter Stickstoffatmosphäre erfolgt. Das Verfahren dieser Referenz unterscheidet sich von dem präzisierten Gegenstand der vorliegenden Anmeldung hinsichtlich der Kupplungstemperatur, welche im Beispiel der 3P-61 254 550 30 Minuten bei 40°C und nach anschliessendem Aufheizen 60 Minuten bei 60°C gehalten wird. In der Beschreibung dieser Entgegenhaltung wird in allgemeiner Form ein breiter Temperaturbereich von 30 bis 70°C offenbart.

Das erfindungsgemässe Verfahren zur Herstellung von Azofarbstoffen der Formel 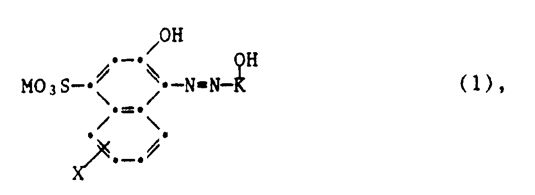
worin K der β-Naphthol-Rest, X Wasserstoff oder Nitro und M ein Alkali-oder Ammoniumion bedeutet, ist dadurch gekennzeichnet, dass man eine wässrige Lösung enthaltend 15 bis 30 Gewichtsprozent einer Diazokomponente der Formel 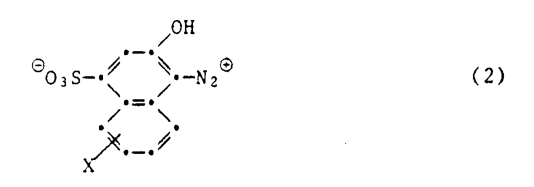
und 6 bis 20 Molprozent Ammoniumsalz, bezogen auf die molare Menge Diazokomponente, bei pH-Wert 10,5-11,5 und einer Temperatur von 30-35°C unter Inertgasatmosphäre auf eine Kupplungskomponente der Formel 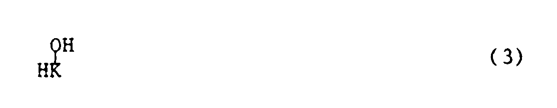
kuppelt, wobei K und X in den Formeln (2) und (3) die unter Formel (1) angegebenen Bedeutungen haben.

Die Kupplung von Verbindungen der Formel (2) auf Verbindungen der Formel (3) ist als schwierig bekannt. So wurde versucht mit Hilfe verschiedener Katalysatoren, wie z.B. in Gegenwart von Zinksalzen oder in Gegenwart von Calzium- oder Magnesiumsalzen, oder durch Kupplung einer hochkonzentrierten Lösung der Diazokomponente der Formel (2) in Gegenwart von Ammoniumsulfat unter Stickstoffatmosphäre die Ausbeute zu verbessern. Zinksalze verbessern die Ausbeute ebenso wie Calcium- und Magnesiumsalze; nachteilig ist der störende Salzgehalt nach beendeter Reaktion, wodurch eine Zwischenabscheidung des gebildeten Azofarbstoffes im allgemeinen notwendig ist. Das Arbeiten unter Stickstoffatmosphäre in Gegenwart von Ammoniumsulfat als hochkonzentrierte Lösung führt häufig zu einer nicht mehr rührbaren Reaktionsmasse, was eine drastische Ausbeutereduktion zur Folge hat.

Es ist überraschend, dass das erfindungsgemässe Verfahren eine deutliche Steigerung der Ausbeute ergibt, dass die erhaltenen Azofarbstoffe ohne Zwischenabscheidung direkt weiterverarbeitet werden können, und dass die Umsetzung bereits nach sehr kurzer Zeit nahezu vollständig beendet ist. Ferner ergibt sich aus der erfindungsgemässen Verfahrensweise keine Belastung des Abwassers durch Schwermetallsalze oder schwerlösliche Salze.

Die Menge, in der das Ammoniumsalz in dem erfindungsgemässen Verfahren verwendet werden kann, kann in den Grenzen von 6 bis 20 Molprozent, insbesondere 12 bis 16 Molprozent, bezogen auf die molare Menge der Diazokomponente der Formel (2), schwanken.

Als Ammoniumsalz kommt in dem erfindungsgemässen Verfahren z.B. Ammoniumchlorid oder Ammoniumsulfat in Betracht.

Als Inertgas kommt in dem erfindungsgemässen Verfahren vorzugsweise Stickstoff in Betracht.

Die Kupplung der Verbindung der Formel (2) mit der Verbindung der Formel (3) wird in wässriger Lösung ausgeführt. Als pH hat sich für die Kupplung ein Wert zwischen 10,5 und 11,5 als vorteilhaft erwiesen. Die sauer vorliegende Diazokomponente der Formel (2) wird zweckmässigerweise vor der Kupplung mit Alkalihydroxid zunächst auf einen pH-Wert von ca. 6 gestellt und nach Zulauf der alkalischen Kupplungskomponenten-Lösung auf den Kupplungs-pH-Wert zwischen 10,5 und 11,5, insbesondere ca. 11, eingestellt. Diese Einstellung erfolgt zweckmässigerweise mit wässriger Natriumhydroxidlösung, vorzugsweise mit einer 30- bis 60-%igen wässrigen Lösung.

Eine bevorzugte Ausführungsform des erfindungsgemässen Verfahrens ist dadurch gekennzeichnet, dass der pH-Wert ca. 11 ist.

Eine weitere bevorzugte Ausführungsform des erfindungsgemässen Verfahrens ist dadurch gekennzeichnet, dass man bei einer Temperatur zwischen 32 und 34°C, kuppelt.

Eine besonders bevorzugte Auführungsform des erfindungsgemässen Verfahrens ist dadurch gekennzeichnet, das man die Verbindung der Formel (2) mit Ammoniumsulfat, insbesondere 12 bis 16 Molprozent, vorzugsweise 15 bis 16 Molprozent, bezogen auf die molare Menge der Diazokomponente versetzt, die Lösung auf den pH-Wert ca. 6 einstellt und unter Stickstoffatmosphäre so schnell wie möglich bei einer Temperatur von 32 bis 34°C eine mittels Alkali auf einen pH-Wert über 12 eingestellte Lösung der Kupplungskomponente der Formel (3) zufliessen lässt.

Das molare Verhältnis der Diazokomponente der Formel (2) zu der Kupplungskomponente der Formel (3) ist 1:1,40 bis 1:1,1, insbesondere 1:1,15 bis 1:1,2.

Eine weitere bevorzugte Ausführungsform des erfindungsgemässen Verfahrens ist dadurch gekennzeichnet, dass die Kupplung adiabatisch erfolgt, wobei eine Anfangstemperatur von mindestens 30°C sich als besonders vorteilhaft erwiesen hat.

Nach erfolgter Kupplung kann der Azofarbstoff der Formel (1) ohne weitere Reinigung direkt weiterverarbeitet werden, z.B. durch Metallisierung zu einem Metallkomplexfarbstoff. Soll der Farbstoff der Formel (1) isoliert werden, hat es sich als günstig erwiesen die Kupplungsmasse kurz zu erwärmen, z.B. auf eine Temperatur von 60 bis 90°C, wodurch eine gut filtrierbare Form des Kupplungsproduktes erhalten wird.

Die Diazokomponenten der Formel (2), die nach dem erfindungsgemässen Verfahren eingesetzt werden können, sind insbesondere 1-Diazo-2-hydroxynapthalin-4-sulfonsäure und 1-Diazo-6-nitro-2-hydroxynaphthalin-4-sulfonsäure. Die Diazokomponenten der Formel (2) sind bekannt und werden nach bekannten Verfahren hergestellt.

Die Kupplungskomponente der Formel (3) ist bekannt und wird nach bekannten Verfahren hergestellt.

Eine besonders interessante Ausführungsform des erfindungsgemässen Verfahrens ist dadurch gekennzeichnet, dass man eine wässrige Lösung enthaltend 24 Gewichtsprozent 1-Diazo-2-hydroxynaphthalin-4-sulfonsäure mit 16 Molprozent Ammoniumsulfat versetzt, die Lösung mit NaOH vor der Kupplung den pH-Wert 6 einstellt, und dann unter Stickstoffatmosphäre so schnell wie möglich bei einer Temperatur von 32 bis 34°C dieser Lösung eine mit Alkali auf einen pH-Wert über 12 eingestellte Lösung von β-Naphthol zufliessen lässt. Die Kupplung erfolgt adiabatisch und ist nach ca. 3 Stunden beendet. Der Azofarbstoff kan direkt ohne Isolierung weiterverarbeitet werden oder kann nach kurzem Erhitzen auf 70 bis 80°C durch Filtration isoliert werden.

Die nach dem erfindungsgemässen Verfahren erhaltenen Azofarbstoffe eignen sich zur Herstellung von Metallkomplexfarbstoffen, wie z.B. Chrom- oder Kobaltkomplexazofarbstoffen, wobei die Metallisierung nach an sich bekannten Methoden erfolgt.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1:

In 440 Teile Wasser werden 137,5 Teile 1-Diazo-2-hydroxynaphthalin-4-sulfonsäure eingetragen und durch Zugabe von 48 Teilen einer 50%igen Natriumhydroxidlösung auf den pH-Wert 6 eingestellt. Durch Zugabe von ca. 50 Teilen Eis wird die Temperatur von 35° eingestellt. Anschliessend gibt man 11,7 Teile Ammoniumsulfat zu und hält das Reaktionsgefäss unter Stickstoffatmosphäre verschlossen. Zu dieser Diazo-Suspension gibt man unter Stickstoffatmosphäre eine Lösunge enthaltend 220 Teile Wasser, 27,5 Teile Natriumhydroxid und 92,5 Teile β-Naphthol. Der pH-Wert der Lösung der Kupplungskomponente ist grösser 12. Die Temperatur der Kupplung beträgt 32 bis 34°. Der pH-Wert wird während 3 Stunden bei 11,0 gehalten durch Zugabe von ca. 5 Teilen Natriumhydroxid. Nach beendeter Kupplung ist kein Stickstoff mehr notwendig. Nach Kupplungsende versetzt man mit 100 Teilen Wasser und stellt mit ca. 75 Teilen 38%iger Salzsäure auf den pH-Wert 4,5. Durch Zusatz einer 5-volumenprozentigen Natriumchloridlösung wird der Farbstoff ausgesalzen, anschliessend filtriert und dann getrocknet. Die Ausbeute beträgt ca. 99 % der Theorie.

Wenn man anstelle von 1-Diazo-2-hydroxynaphthalin-4-sulfonsäure eine äquimolare Menge 1-Diazo-6-nitro-2-hydroxynaphthalin-4-sulfonsäure verwendet, erhält man einen Farbstoff mit ähnlich hoher Ausbeute in verleichbar kurzer Verweilzeit im Kupplungskessel.

Die erhaltenen Farbstoffe können ohne Zwischenabscheidung oder ohne Reinigung direkt zum Metallkomplex weiterverarbeitet werden.

### Beispiele 2 bis 5:

Verfährt man wie in Beispiel 1 angegeben, verwendet jedoch statt 11,7 Teilen Ammoniumsulfat die in Tabelle 1 angegebenen Mengen Ammoniumsulfat, so erhält man den gleichen Farbstoff in ähnlich guter Ausbeute.

**Tabelle 1**

| Bsp. | Teile Ammoniumsulfat |
|---|---|
| 2 | 5 Teile |
| 3 | 9,4 Teile |
| 4 | 11,2 Teile |
| 5 | 13 Teile |

## Patentansprüche

1. Verfahren zur Herstellung von Azofarbstoffen der Formel 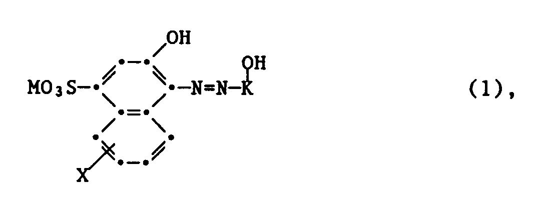 worin K der β-Naphthol-Rest ist, X Wasserstoff oder Nitro und M ein Alkali- oder Ammoniumion bedeutet, dadurch gekennzeichnet, dass man eine wässrige Lösung enthaltend 15 bis 30 Gewichtsprozent einer Diazokomponente der Formel 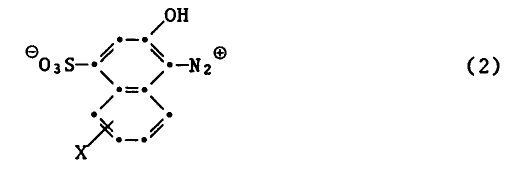 und 6 bis 20 Holprozent Ammoniumsalz, bezogen auf die molare Menge der Diazokomponente, bei pH-Wert 10,5 bis 11,5 und einer Temperatur von 30 bis 35°C unter Inertgasatmosphäre auf eine Kupplungskomponente der Formel 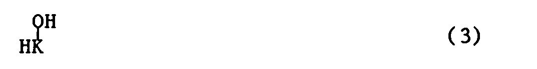 kuppelt, wobei K und X in den Formeln (2) und (3) die unter Formel (1) angegebenen Bedeutungen haben.

2. Verfahren gemäss Anspruch 1, dadurch gekennzeichnet, dass man in Gegenwart von Ammoniumsulfat oder Ammoniumchlorid kuppelt.

3. Verfahren gemäss Anspruch 1, dadurch gekennzeichnet, dass man in Gegenwart von 12 bis 16 Molprozent Ammoniumsulfat kuppelt.

4. Verfahren gemäss einem der Ansprüche 1 bis 3, dadurch gekennzeichnet, dass man bei pH-Wert 11,0 kuppelt.

5. Verfahren gemäss einem der Ansprüche 1 bis 4, dadurch gekennzeichnet, dass man in Gegenwart von 15 bis 16 Molprozent Ammoniumsulfat kuppelt.

6. Verfahren gemäss einem der Ansprüche 1 bis 5, dadurch gekennzeichnet, dass man unmittelbar vor der Kupplung der Lösung/ Suspension enthaltend die Diazokomponente und Ammoniumsulfat den pH auf einen Wert zwischen 5,5 und 7,0, insbesondere 6, einstellt.

7. Verfahren gemäss Anspruch 6, dadurch gekennzeichnet, dass man bei einer Temperatur zwischen 32 und 34°C kuppelt.

8. Verfahren gemäss einem der Ansprüche 1 bis 7, dadurch gekennzeichnet, dass man adiabatisch kuppelt.

9. Verfahren gemäss einem der Ansprüche 1 bis 8, dadurch gekennzeichnet, dass man eine Diazokomponente der Formel (2) verwendet, worin X Wasserstoff ist.

10. Verfahren gemäss einem der Ansprüche 1 bis 9, dadurch gekennzeichnet, dass man unter Stickstoffatmosphäre kuppelt.

## Claims

1. A process for the preparation of an azo dye of formula 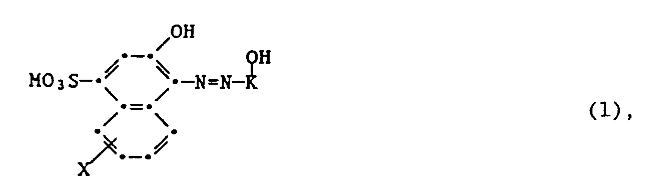 in which K is the β-naphthol radical, X is hydrogen or nitro and M is an alkali metal ion or an ammonium ion, which process comprises coupling an aqueous solution containing 15 to 30 percent by weight of a diazo component of formula 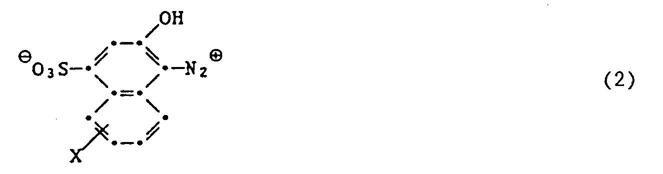 and 6 to 20 molar percent of an ammonium salt, based on the molar amount of the diazo component, at a pH from 10.5 to 11.5 and at a temperature from 30 to 35°C under an inert gas atmosphere, to a coupling component of formula 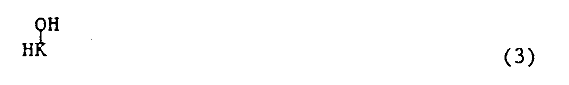 in which formulae (2) and (3) K and X are as defined for formula (1).

2. A process according to claim 1, wherein the coupling is carried out in the presence of ammonium sulfate or ammonium chloride.

3. A process according to claim 1, wherein the coupling is carried out in the presence of 12 to 16 molar percent of ammonium sulfate.

4. A process according to any one of claims 1 to 3, wherein the coupling is carried out at a pH of 11.0.

5. A process according to any one of claims 1 to 4, wherein the coupling is carried out in the presence of 15 to 16 molar percent of ammonium sulfate.

6. A process according to any one of claims 1 to 5, wherein the pH is adjusted to a value between 5.5 and 7.0, preferably to 6, immediately before the coupling of the solution/suspension containing the diazo component and ammonium sulfate.

7. A process according to claim 6, wherein the coupling is carried out at a temperature between 32 and 34°C.

8. A process according to any one of claims 1 to 7, wherein the coupling is carried out adiabatically.

9. A process according to any one of claims 1 to 8, which comprises the use of a diazo component of formula (2) in which X is hydrogen.

10. A process according to any one of claims 1 to 9, wherein the coupling is carried out under a nitrogen atmosphere.

## Revendications

1. Procédé de préparation de colorants azoïques de formule : 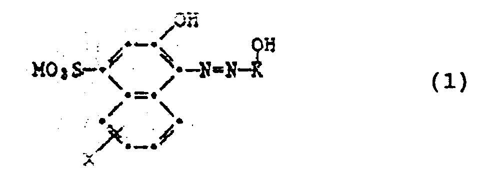 dans laquelle K représente le reste du β-naphtol, X représente un atome d'hydrogène ou un groupe nitro et M représente un ion de métal alcalin ou un ion ammonium, et caractérisé par le fait que l'on copule une solution aqueuse renfermant 15 à 30 % en poids d'un composé diazo de formule : 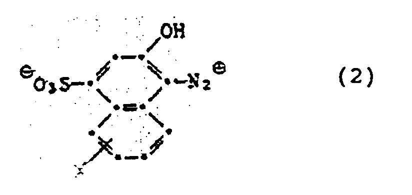 et 6 à 20 % en moles de sel d'ammonium, par rapport à la quantité molaire de composé diazo, à un pH de 10,5 à 11,5 et une température de 30 à 35°C, sous atmosphère de gaz inerte, avec un copulant de formule : 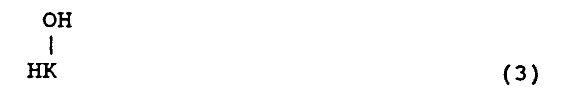 K et X ayant dans les formules (2) et (3) les significations indiquées à propos de la formule (1).

2. Procédé selon la revendication 1, **caractérisé** en ce que l'on effectue la copulation en présence de sulfate d'ammonium ou de chlorure d'ammonium.

3. Procédé selon la revendication 1, **caractérisé** en ce que l'on effectue la copulation en présence de 12 à 16 % en moles de sulfate d'ammonium.

4. Procédé selon l'une des revendications 1 à 3, **caractérisé** en ce que l'on effectue la copulation à un pH de 11,0.

5. Procédé selon l'une des revendications 1 à 4, **caractérisé** en ce que l'on effectue la copulation en présence de 15 à 16 % en moles de sulfate d'ammonium.

6. Procédé selon l'une des revendications 1 à 5, **caractérisé** en ce que l'on règle, immédiatement avant la copulation de la solution/suspension renfermant le composé diazo et le sulfate d'ammonium, le pH à une valeur comprise entre 5,5 et 7,0, en particulier à 6.

7. Procédé selon la revendication 6, **caractérisé** en ce que l'on effectue la copulation à une température comprise entre 32 et 34°C.

8. Procédé selon l'une des revendications 1 à 7, **caractérisé** en ce que l'on effectue la copulation d'une manière adiabatique.

9. Procédé selon l'une des revendications 1 à 8, **caractérisé** en ce que l'on utilise un composé diazo de formule (2) pour lequel X représente un atome d'hydrogène.

10. Procédé selon l'une des revendications 1 à 9, **caractérisé** en ce que l'on effectue la copulation sous atmosphère d'azote.
